# EUROPEAN PATENT SPECIFICATION

(11) **EP 0 569 973 B1**
(45) Date of publication and mention of the grant of the patent: **09.04.1997**
(21) Application number: 93107753.1
(22) Date of filing: 12.05.1993
(51) Int. Cl.: F26B 15/14, B65G 39/16

(54) **Vertical drier with movable trays**
Vertikaltrockner mit beweglichen Tragplatten
Sécheur vertical à plateaux amovibles

(30) Priority: 13.05.1992 IT MI921138
(43) Date of publication of application: 18.11.1993
(73) Proprietor: CEFLA SOC. COOP. A R.L., I-40026 Imola, Bologna (IT)
(72) Inventor: Raggi, Gianni, I-40026 Imola, Bologna (IT)
(74) Representative: Vatti, Paolo, Dr. Ing.

(56) References cited:
- DE-A- 1 556 868
- DE-A- 2 137 454
- DE-A- 3 632 740
- FR-A- 2 429 735
- GB-A- 1 332 235
- US-A- 2 718 156
- PATENT ABSTRACTS OF JAPAN vol. 7, no. 217 (M-245)(1362) September 1983 & JP-A-58 113 009 (ISHIKAWAJIMA HARIMA JUKOGYO K.K.)
- PATENT ABSTRACTS OF JAPAN vol. 7, no. 215 (M-244)(1360) September 1983 & JP-A-58 109 307 (ISHIKAWAJIMA HARIMA JUKOGYO K.K.)

## Description

The present invention concerns vertical driers or kilns equipped with movable trays comprising belt conveyors apt to be operated in correspondence of loading and/or unloading stations of said trays.

Vertical driers and kilns with movable trays are well known in technique and widely used. Equally known are vertical driers and kilns with movable trays provided with own means to convey the pieces to be dried. Such means usually consist of: - a slat conveyor formed of slats or transversal bars, operated by pairs of longitudinal chains extending parallel and close to the sides of the tray (in this case, also a covering sheet can be fixed to the slats or bars); - a conventional belt conveyor comprising end rollers, one of them being a driving roller, and a belt winding on said rollers and being moved by the driving roller; - a belt conveyor with an inserted guide, having stuck and cured V-shaped profiles.

In the first case, the movable trays turn out to be quite heavy - in a prejudicial way - but they allow to obtain a very regular movement of the conveying means mounted thereon, and thus of the pieces being conveyed: in fact, the slats or bars and/or the sheet covering the same, onto which bear the pieces being dried, are perfectly guided in their movement controlled by the chains.

In the second case, the movable trays are much lighter, and also their construction and structure are more simple and economic, but great problems arise in the centering of the conveyor belt when having to adopt thin belts, as is required to avoid using exceedingly large end rollers. To solve this problem various expedients have been adopted - for example, anchoring the belt of the conveyor to "V" belts freely sliding along the sides of the tray and inserted into correspondingly shaped slits of the rollers - which have however created serious constructive complications and working inconveniences, as well as being quite liable to failures.

In the third case, the whole system is very costly and scarcely heat-resistant; furthermore, the friction of the guide belts against the respective centering profile can cause dust which, as known, can be very harmful for the production when it deposits onto the pieces being treated in such driers.

Other types of conveying means for the trays - as, for instance, the nylon thread conveyors (scarcely reliable for the mechanical and expansion problems present therein) - have since long been abandoned.

From the above it can be easily understood how felt is the requirement to find new and different solutions, providing for simple and light trays, equipped with a thin belt conveyor having end rollers of small diameter, which involves no belt centering problems (or which is apt to guarantee a remedy to such problems).

In the belt conveyors field it is known - for example from DE-1556868 - to correct the deviations of the belt from its centred position by means of couples of transversal inclined diverging rollers, which are made operative alternatively on the belt itself when shiftings from the centred positions are noted, in order to obtain correcting deviations of opposed direction.

Means of this kind are however never been mounted on the belt conveyors of movable trays of vertical driers, which would be made too heavy and too complicated in their constructions.

Such an application is now instead possible with the present invention, which solves in a completely satisfactory way the problem of the equipment of vertical driers with simple and light trayers provided of very efficacious belt conveyors.

According to the invention it is in fact provided a vertical drier or kiln with movable trays having loading and/or unloading stations, wherein each tray comprises a framework and a belt conveyor operated in correspondence of said stations, characterized in that, the belt conveyor of each tray is provided with transversal inclined pairs of clamping rollers, meant to correct the deviations of the belt from its exact centred position, and with means for pressing together the rollers - normally apart - of said pairs, and in that, on the fixed structure of the drier, in correspondence of said loading and/or unloading stations, there are mounted: a pair of sensors to detect the deviations of the conveyor belt, carried by an oscillating support controlled by a pneumatic cylinder so as to take up a set back and, respectively, a drawn close position in respect of said tray, and a pair of cylinders to operate the means pressing together said clamping rollers, mounted so that the trays may not interfere therewith when performing their movements. Both said pairs are apt to change from an inactive rest condition - when the trays are moving - to an active condition - when one tray is stationary to allow loading and/or unloading - in which they conjugate with said tray, in this active condition the pair of sensors being apt to detect if the conveyor belt is in a centred position, and the pair of cylinders being apt to operate - if required - under the control of said sensors, the means pressing together the clamping rollers, so as to center said belt.

In said vertical drier or kiln, the means for pressing together the rollers of said pairs of clamping rollers preferably comprise a toggle-joint lever, pivoted at one end to the framework of the tray and carrying, in correspondence of its toggle, the shaft of one of the rollers of said pair. Furthermore, the cylinders operate on said means by engagement of their piston rods with the free end of said toggle-joint lever, when the trays are stationed in the loading and/or unloading station.

The sensors are normally set back in respect of the position taken up by the sides of the trays in the loading and/or unloading stations, and they are drawn close to said sides when a tray stops in one of said stations.

The invention will now be described in further detail with reference to the accompanying drawings, which illustrate by way of non-limiting example a preferred embodiment thereof, and in which:
Fig. 1 is a diagrammatic vertical cross section view of a vertical drier or kiln according to the invention;
Fig. 2 is a diagrammatic plan view of the drier or kiln shown in fig. 1, with one of its movable trays stationed in the loading station;
Fig. 3 is a diagram of the belt conveyor mounted on the movable trays of the drier according to the invention;
Figs. 4 and 5 are, respectively, a plan view and a lateral view of the means for pressing together the rollers of the inclined pairs of clamping rollers for centering the conveyor belt shown in fig. 3; and
Fig. 6 is a plan view showing part of a movable tray of the drier according to the invention, as well as the means to detect the centred position of the conveyor belt of said tray.

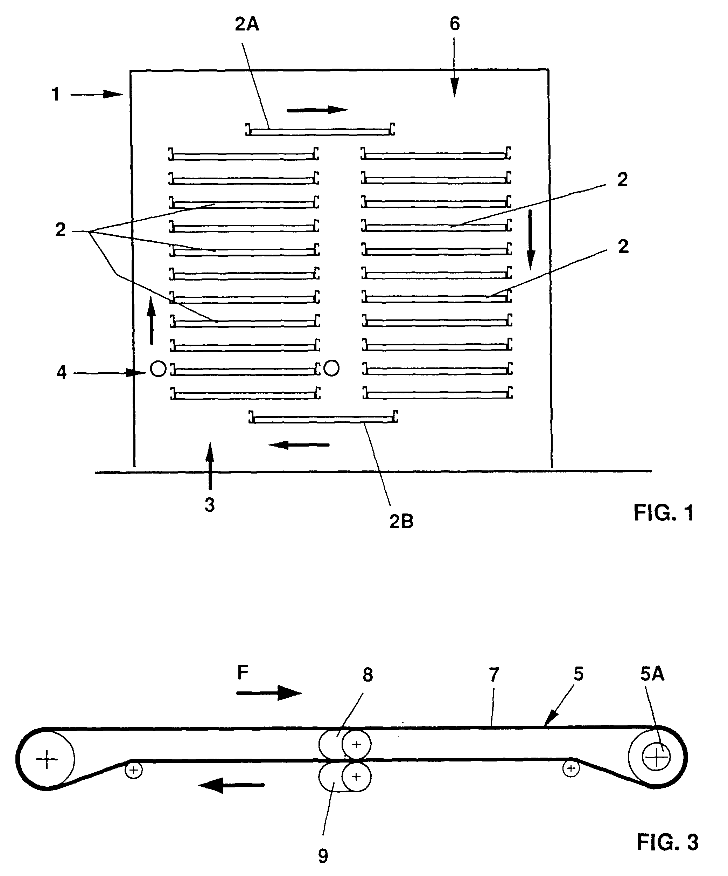

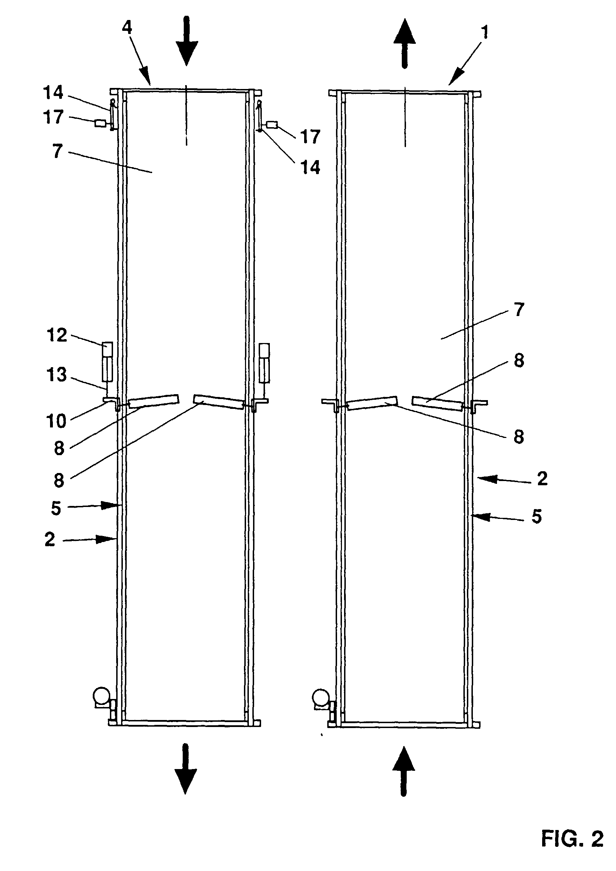

As clearly shown on the drawings, the trays 2 of the vertical drier or kiln 1 according to the invention (figs. 1 and 2) are apt to move vertically - in known manner - thanks to four chains (not shown) provided with suitable spikes. When the trays 2 reach, from the bottom, the loading station 4 of the charging side 3 of the kiln, they receive the pieces to be treated from suitable conveyors (not shown). The loading takes place - in a direction orthogonal to the plane of fig. 1 - thanks to the conveying means provided on each tray 2. Such means consist of the belt conveyor 5 (shown in fig. 2) which is moved in known manner - in the direction of arrow F - through engagement of a driving gear, having a fixed position in the loading station 4 of the drier, with a gear mounted on the shaft of the drawing roller 5A of the conveyor 5. When loading is completed, the trays 2 move (fig. 1) upwards until, having reached the top of the charging side 3, they are transferred (2A) - by a known translation system (not shown) - to the adjacent discharching side 6, where they are moved downwards. At the bottom of the discharging side 6 there is a further translation system, which again transfers (2B) the trays 2 to the charging side 3. The pieces can be unloaded from the discharging side 6 of the kiln in the two directions (by means of another device operating as the already described belt conveyor 5 of the trays 2) or else from the charging side 3, opposite to the loading side, by operating said driving gear of the loading station 4 in the opposite way to when loading takes place. The belt conveyors 5 are thus operated only in one or two fixed positions of their path. Particularly in the loading position, it is of utmost importance to keep the belt 7 of the conveyor 5 exactly centred; said centering is in fact required to correctly load the pieces on the tray 2, for an efficient drying thereof. The exact centering of the belt 7 is however useful also in the unloading position, when deviations have occurred in the previous travelling step.

The object of the present invention is to actually guarantee the centering of the belt 7 of the conveyor 5 in a simple and reliable way.

Said object is reached by equipping each tray 2 with means to correct the deviations of the conveyor belt 7 from its exact centred position, and by equipping the loading station 4 of the drier or kiln 1 with means to operate said centering means and with sensing means to detect the deviations of the belt 7, apt to control said operating means.

As shown in figs. 2 to 5, the means to center the conveyor belt 7 comprise two inclined transversal divergent pairs of clamping rollers 8, 9, which are normally drawn apart, but can be drawn close and pressed together so as to clamp between them the belt 7. In fact, while the roller 8 is carried by a shaft fixed to the framework of the tray 2, the roller 9 is mounted on a toggle-joint lever 10, pivoted at one end (in. 11) to the framework of the tray 2 and carrying, on its toggle 10A, the shaft of the roller 9. A stop 10B keeps the lever 10 in the normally parted position of the rollers 8 and 9. The clockwise oscillation of the lever 10 - obtained by acting on its free end far from the pivoting point 11 - allows to press together the rollers 8 and 9 of each pair of centering rollers, with the interposition of the belt 7, so as to correct in known manner the deviations of said belt from its exact centred position, in one direction or the other according to the pair of rollers the operation of which has been determined by the sensing means detecting the deviations of the belt 7.

The operation of the means pressing together the rollers 8, 9, of either pair of clamping rollers, allowing to center the conveyor belt 7 of the trays 2 - which rollers are normally in an inactive parted position along the whole path of said trays - is controlled by simple members consisting, according to the invention, of a pair of pneumatic cylinders 12 fixed to the structure 1 of the drier or kiln, in the loading station 4, along the sides of the tray 2. When the cylinders 12 are in an inactive rest condition, their piston rod 13 is withdrawn and the trays 2 move in a vertical direction, towards and away from the loading station 4, without said rods interfering therewith, nor engaging the means pressing together the rollers 8, 9. When - with one of the trays 2 stationed in the loading station 4 - either of the two cylinders 12 is operated, its piston rod 13 moves out in order to engage the end - far from that pivoted in 11 - of the toggle-joint lever 10 of the corresponding pair of rollers 8, 9, of said tray 2, thereby causing the oscillation of said lever and thus pressing together the rollers 8 and 9 of said pair in order to correctly center the belt 7, as required. Said correction takes place, in known manner, thanks to the deviating effect which the pair of clamping rollers 8, 9, produces on the belt 7 due to the movement of this latter and to the inclination of the rollers clamping the same. As the cylinder 12 is stopped, its piston rod 13 withdraws, thereby releasing the lever 10; this latter and the roller 9 thus take up again their inactive position and the centering action of said pair of rollers comes to an end.

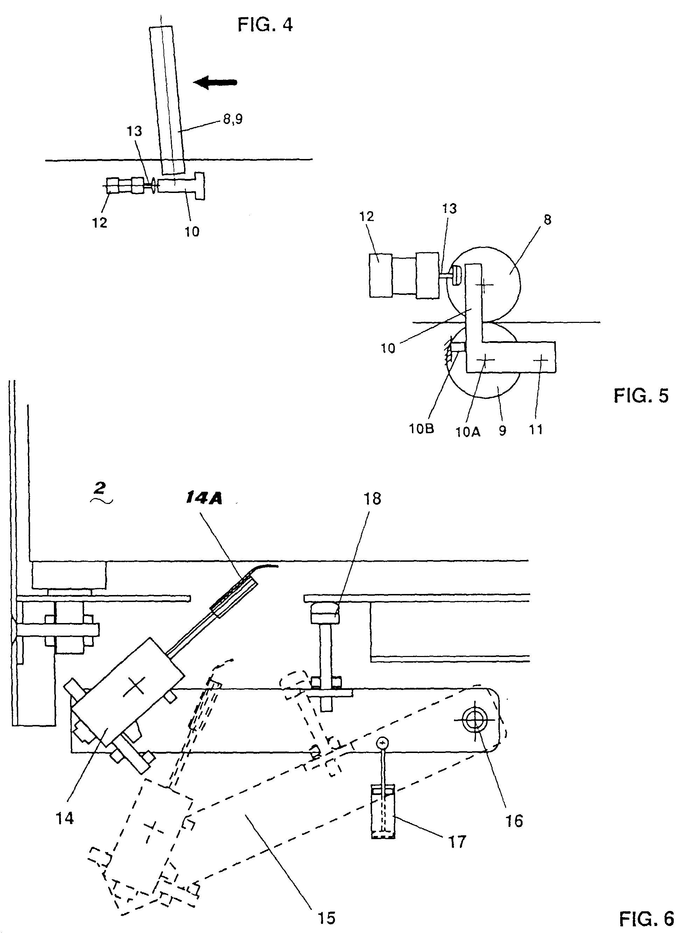

As already seen, the cylinders 12 are normally inactive; they must in fact operate only when a significant deviation of the conveyor belt 7, from its exact centred position, takes place in the trays 2. To warn the cylinders 12 that such a deviation is taking place, the invention provides for the presence - in the loading station 4 - of pairs of detecting sensors 14, positioned on both sides of the trays 2 close to the edges of the belt 7 of their conveyor 5. The sensors 14 are carried by supports 15 which can be caused to oscillate, by the action of a pneumatic cylinder 17, about a pivoting point 16 of the kiln structure 1 in the loading station 4. Normally, the supports 15 and the sensors 14 are kept spaced from the tray 2 (position in dashed lines in fig. 6), but they are drawn close to said tray, so as to conjugate therewith, when the same stops in its loading position in the station 4. The correct position of the sensors is guaranteed by a plate 18 bearing against the side of the tray 2. In this position, the sensing element 14A of the sensor 14 (which is preferably a pneumatic sensor) moves very close to the edge of the belt 7 of the conveyor of said tray (position in full lines in fig. 6) and is thus able to detect any deviations of said belt from a perfectly centred position. As soon as a significant deviation is detected, the sensors 14 control the action of the cylinder 12, which causes the operation of the pair of clamping rollers 8, 9, meant to re-establish the exact centred position of the belt 7. The rollers 8, 9, act for the length of time required to obtain the necessary correction; in fact, as soon as the sensors 14 detect that the belt 7 is again in a centred position, they stop the action of the cylinder 12, which removes the mutual pressure from the clamping rollers 8, 9, which thus stop their action on the belt 7.

It is evident that the aforedescribed and illustrated arrangement allows - on one hand - to use light trays of very simple structure, equipped with thin belt conveyors, and - on the other hand - to guarantee a perfect working of said conveyors and, thus, a precise and reliable transfer of the pieces to be treated through each step. This result is very advantageously obtained at limited costs and with a very simple and safe installation, since all the members (delicate and expensive pneumatic systems) which control the proper working of the belt conveyors of each tray are concentrated in the loading station (and are mounted fixed and, thus, less subject to failures) and simply consist of two pairs of operating elements and of detection means (with evidently high savings).

These members - which do not interfere with the movement of the trays and operate, each time, only on the tray stationed in the loading position - are, furthermore, also simple and reliable, with additional advantages for what concerns the quality of the drier or kiln.

Finally, the adopted arrangement puts no limits to the transversal dimensions of the conveyor belt, which may be of a width such as to leave wide lateral spaces between its edges and the sides of the tray on which it is mounted, apt to favour air circulation in the drier.

It is understood that there may be many other embodiments of the vertical drier according to the invention. For example, the members to control and operate the correction of the belt deviations from its exact cent red position may also be mounted in the unloading station, as well as in the loading station of the trays. Furthermore, the movements causing the sensors to conjugate with the tray, in a loading or unloading position, may be translatory (back and forth) movements, instead of rotary movements as in the illustrated embodiment of the invention.

## Claims

1. Vertical drier or kiln with movable trays having loading and/or unloading stations, wherein each tray comprises a framework and a belt conveyor operated in correspondence of said stations, characterized in that, the belt conveyor (5) of each tray (2) is provided with transversal inclined pairs of clamping rollers (8, 9) meant to correct the deviations of the belt (7) from its exact centred position, and with means pressing together the rollers (8, 9) - normally apart - of said pairs, and in that, on the fixed structure (1) of the drier, in correspondence of said loading and/or unloading stations, there are mounted: a pair of sensors (14) to detect the deviations of the conveyor belt (7). carried by an oscillating support (15) controlled by a pneumatic cylinder (17) so as to take up a set back and, respectively, a drawn close position in respect of said tray (2); and a pair of cylinders (12) to operate the means pressing together said clamping rollers (8, 9), mounted so that the trays (2) may not interfere therewith when performing their movements.

2. Vertical drier or kiln as in claim 1), wherein the means for pressing together the rollers (8, 9) of said pairs of clamping rollers comprise a toggle-joint lever (10), pivoted at one end (in 11) to the framework of the tray (2) and carrying, in correspondence of its toggle (10A), the shaft of one of the rollers (9) of said pair.

3. Vertical drier or kiln as in claim 1), wherein said sensors (14) are normally in a set back position in respect of the position taken up by the sides of said trays (2) in the loading and/or unloading stations and, when a tray (2) stops in one of said stations, they are drawn close to said sides due to oscillation of said support (15) produced by said pneumatic cylinder (17).

4. Vertical drier or kiln as in claims 1) to 3), wherein the cylinders (12) operating the means for pressing together the clamping rollers (8, 9) have their piston rods (13) apt to engage the free end of the toggle-joint levers (10), forming said means pressing together the clamping rollers (8, 9), when the trays (2) are stationed in the loading and/or unloading station and said cylinders (12) are operated.

## Patentansprüche

1. Vertikaltrockner oder -ofen mit beweglichen Trägern, die Lade- und/oder Entladestationen haben, wobei jeder Träger einen Rahmen und ein Förderband, das in Übereinstimmung mit den Stationen arbeitet, hat, dadurch gekennzeichnet, daß das Förderband (5) jeden Trägers (2) mit in Querrichtung geneigten Paaren von Klemmrollen (8, 9) versehen ist, die dazu dienen, die Abweichungen des Bandes (7) von der genau zentrierten Position zu korrigieren, und mit Mitteln, die die - normalerweise voneinander beabstandeten - Rollen (8, 9) des Paares zusammenzudrücken und dadurch, daß auf der festen Struktur (1) des Ofens in Übereinstimmung mit den Lade- und/oder Entladestationen montiert sind: ein Paar von Sensoren (14) zum Erkennen der Abweichungen des Förderbandes (7), die von einer oszillierenden Stütze (15) getragen werden, der von einem pneumatischen Zylinder (17) kontrolliert wird, um so eine rückgestellte bzw. eine nahe bezüglich des Trägers (2) vorgezogene Position einzunehmen; und mit einem Paar von Zylindern (12) zum Betreiben der Mittel zum Zusammendrücken der Klemmrollen (8, 9), die derart montiert sind, daß der Träger (2) bei Ausführung deren Bewegungen mit diesen nicht in Berührung kommen.

2. Vertikaltrockner und/oder -ofen nach Anspruch 1, wobei die Mittel zum Zusammendrücken der Rollen (8, 9) des Paares von Klemmrollen einen Kniegelenkhebel (10) aufweisen, der an einem Ende (bei 11) mit dem Rahmen des Trägers (2) gelenkig verbunden ist und in Übereinstimmung mit seinem Kniegelenk (10A die Welle der einen der Rollen (9) des Paares trägt.

3. Vertikaltrockner und/oder -ofen nach Anspruch 1, wobei die Sensoren (14) normalerweise in der rückgestellten Position bezüglich der Position, die von den Seiten des Trägers (2) in der Lade- und/oder der Entladestation eingenommen wird, sind, und daß die Sensoren dann, wenn ein Träger (2) in einer der Stationen stoppt, aufgrund der Schwingung der Stütze (15), die durch den Pneumatikzylinder (17) verursacht wird, nahe zu den Seiten gezogen werden.

4. Vertikaltrockner und/oder -ofen nach einem der Ansprüche 1 bis 3, wobei die Zylinder (12), die die Mittel zum Zusammendrücken der Klemmrollen (8, 9) betreiben, ihre Kolbenstange (13) derart haben, daß sie dazu eingerichtet sind, daß freie Ende der Kniegelenkhebel (10), die das Mittel zum Zusammendrücken der Klemmrollen (8, 9) bilden, zu ergreifen, wenn die Träger (2) in der Lade- und/oder Entladestation sind und die Zylinder (12) betrieben werden.

## Revendications

1. Séchoir ou four vertical avec des plateaux mobiles comportant des postes de chargement et/ou déchargement, dans lequel chaque plateau comprend un châssis et un transporteur à bande actionné en correspondance desdits postes, caractérisé en ce que le transporteur à bande (5) de chaque plateau (2) est doté de paires inclinées, transversales, de rouleaux de serrage (8, 9) destinées à corriger les déviations de la bande (7) depuis sa position centrée exacte, et d'un moyen pressant l'un contre l'autre les rouleaux (8, 9) - normalement séparés - desdites paires, et en ce que, sur la structure fixe (1) du séchoir, en correspondance desdits postes de chargement et/ou déchargement, sont montées : une paire de capteurs (14) pour détecter les déviations de la bande (7) du transporteur, supportée par un support oscillant (15) commandé par un cylindre pneumatique (17) afin d'adopter une position éloignée et, respectivement, rapprochée dudit plateau (2); et une paire de cylindres (12) pour actionner le moyen pressant l'un contre l'autre lesdits rouleaux de serrage (8, 9), montée de manière que les plateaux (2) ne puissent la rencontrer pendant leur déplacement.

2. Séchoir ou four vertical selon la revendication 1, dans lequel le moyen pour presser l'un contre l'autre les rouleaux (8, 9) desdites paires de rouleaux de serrage comprend un levier à genouillère (10), pivotant à une extrémité (en 11) sur le châssis du plateau (2) et supportant, en correspondance de sa genouillère (10A), l'arbre d'un des rouleaux (9) de ladite paire.

3. Séchoir ou four vertical selon la revendication 1, dans lequel lesdits capteurs (14) sont normalement dans une position éloignée par rapport à la position adoptée par les côtés desdits plateaux (2) dans les postes de chargement et/ou déchargement et, lorsqu'un plateau (2) s'arrête dans un desdits postes, ils sont rapprochés tout près desdits côtés en raison de l'oscillation dudit support (15) produite par ledit cylindre pneumatique (17).

4. Séchoir ou four vertical selon les revendications 1 à 3, dans lequel les cylindres (12) actionnant les moyens pour presser l'un contre l'autre les rouleaux de serrage (8, 9) ont leur tige de piston (13) adaptée à engager l'extrémité libre des leviers à genouillère (10), formant lesdits moyens pressant l'un contre l'autre les rouleaux de serrage (8, 9), lorsque les plateaux (2) sont arrêtés dans le poste de chargement et/ou déchargement et lesdits cylindres (12) sont actionnés.
